(19) **Europäisches Patentamt / European Patent Office / Office européen des brevets**

(11) **EP 1 668 804 B1**

(12) **FASCICULE DE BREVET EUROPEEN**

(45) Date de publication et mention
de la délivrance du brevet:
**31.05.2017 Bulletin 2017/22**

(21) Numéro de dépôt: **04786233.9**

(22) Date de dépôt: **26.08.2004**

(51) Int Cl.:
***H04B 10/40*** *(2013.01)*

(86) Numéro de dépôt international:
**PCT/EP2004/051910**

(87) Numéro de publication internationale:
**WO 2005/022785 (10.03.2005 Gazette 2005/10)**

(54) **DISPOSITIF DE COMMUNICATION MONO-VOIE POUR FIBRE OPTIQUE**

EINKANALIGE KOMMUNIKATIONSEINRICHTUNG FÜR OPTISCHE FASER

SINGLE-CHANNEL COMMUNICATION DEVICE FOR OPTICAL FIBRE

(84) Etats contractants désignés:
**DE FR GB**

(30) Priorité: **29.08.2003 FR 0310312**

(43) Date de publication de la demande:
**14.06.2006 Bulletin 2006/24**

(73) Titulaires:
- **Thales**
  **92400 Courbevoie (FR)**
- **Radiall**
  **93116 Rosny-sous-Bois (FR)**

(72) Inventeurs:
- **TOILLON, Patrice**
  **THALES Intellectual Property**
  **F-94117 ARCUEIL Cedex (FR)**

- **PEZ, Mathias**
  **THALES Intellectual Property**
  **F-94117 ARCUEIL Cedex (FR)**
- **QUENTEL, François**
  **THALES Intellectual Property**
  **F-94117 ARCUEIL Cedex (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**FR-A- 2 556 480        US-A- 5 963 349**
**US-B1- 6 351 584**

Printed by Jouve, 75001 PARIS (FR)

**Description**

Le domaine de l'invention est celui des dispositifs de communication à fibre optique connus sous la dénomination anglo-saxonne de transceiver et des systèmes de communication associés.

Ces dispositifs de communication sont notamment utilisés dans le domaine aéronautique pour assurer le dialogue entre calculateurs électroniques embarqués. Ils sont également utilisés en télécommunications civiles.

Les systèmes de communication récents mettent de plus en plus en oeuvre des éléments centraux permettant de relier plusieurs calculateurs électroniques entre eux, les calculateurs étant encore appelés abonnés. La topologie générale de ces réseaux est de type étoile ou multi-étoile. Chaque centre d'étoile est occupé par un élément central qui peut être soit un coupleur optique passif, soit un élément appelé Hub qui assure la fonction répéteur avec surveillance des données transmises, soit encore un élément appelé Switch qui assure à la fois la fonction de répéteur et de commutation entre les différents abonnés. Ces derniers éléments sont notamment utilisés dans le cas de réseaux dits Ethernet Switché.

Classiquement, les liaisons inter-éléments de ce type de système de communication sont assurées par des liaisons électriques bi-voies, la première dédiée à l'émission et la seconde à la réception des signaux. Ce système dit full-duplex permet l'émission et la réception simultanée de signaux sur un même calculateur. Chaque liaison électrique est réalisée généralement par un câble électrique unique comprenant deux paires de fils torsadés blindés, les dénominations anglo-saxonnes du câble étant Double Twisted Pairs ou encore Star Quad. Chaque câble est connecté au calculateur électronique abonné par des connecteurs électriques quatre contacts encore appelé Quadrax. Ces connecteurs sont utilisés par exemple sur les réseaux Ethernet aéronautique embarqué de type ARINC 664.

Les liaisons électriques entre calculateurs présentent cependant un certain nombre d'inconvénients. On citera, en particulier, une bande passante limitée à 100 Mbits/s ainsi que, pour les applications embarquées sur aéronefs un poids non négligeable.

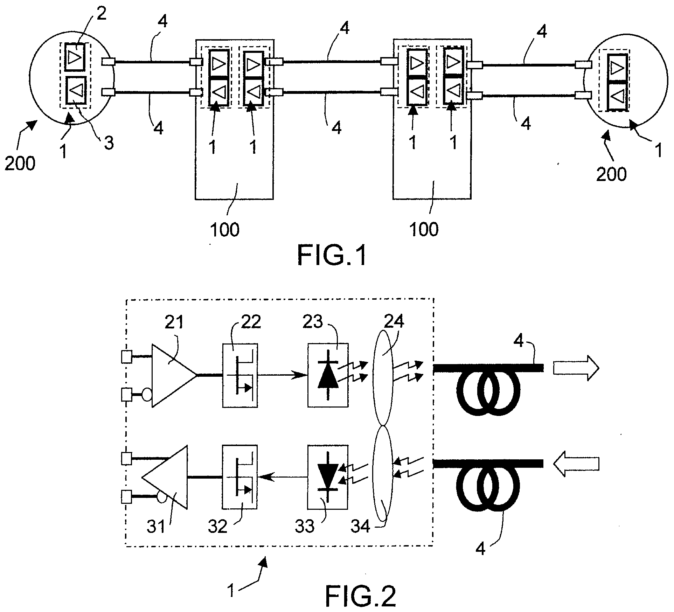

Une solution possible pour limiter ces problèmes consiste à remplacer les liaisons électriques par des liaisons à fibre optique. La figure 1 illustre une architecture de ce type. Cette figure représente les liaisons entre deux calculateurs abonnés 200 symbolisés par des cercles. Ces deux abonnés sont reliés entre eux par l'intermédiaire de deux éléments centraux 100. Les liaisons abonné-élément central et élément central-élément central sont réalisées par des paires de fibres optiques 4. Chaque paire est reliée à ces deux extrémités à un dispositif de communication de type transceiver 1 comportant une partie émettrice 2 et une partie réceptrice 3, la fonction du transceiver est de transformer les signaux électroniques émis et reçus par le calculateur ou l'élément central en signaux optiques pouvant circuler dans la fibre optique de liaison.

La figure 2 détaille l'architecture de chaque transceiver 1. La partie émettrice 2 comprend une interface électronique numérique d'entrée 21 compatible des niveaux électriques de la carte électronique d'accueil, une électronique analogique 22 transformant les signaux numériques en signaux analogiques, une source optique émettrice 23 qui émet un faisceau lumineux 25 modulé par le signal issu de l'électronique 22 (symbolisé par une double-flèche en zig-zag sur la figure 2). L'optique 24 assure le couplage optique dudit faisceau avec la fibre optique 4. La partie réceptrice comporte une seconde optique 35 qui assure le couplage du faisceau reçu par la fibre optique 4 sur un photo-détecteur 33. Le signal électrique issu du photo-détecteur passe ensuite par une électronique analogique 32 et enfin par une électronique numérique 31 qui délivre un signal numérique de même nature que celle du signal numérique d'émission.

Cette solution utilisant deux fibres optiques, bien que présentant certains avantages par rapport aux liaisons électriques, notamment en terme de bande passante, présente cependant plusieurs inconvénients importants, essentiellement en terme de coûts, d'encombrement (un élément central peut desservir jusqu'à 24 abonnés et par conséquent nécessiter une interface comprenant autant de transceivers), d'installation des câbles et de gestion de la maintenance associée et également en terme de fiabilité du système complet.

Pour pallier ces inconvénients, une solution possible consiste à remplacer la liaison bi-fibre par une solution mono-fibre optique.

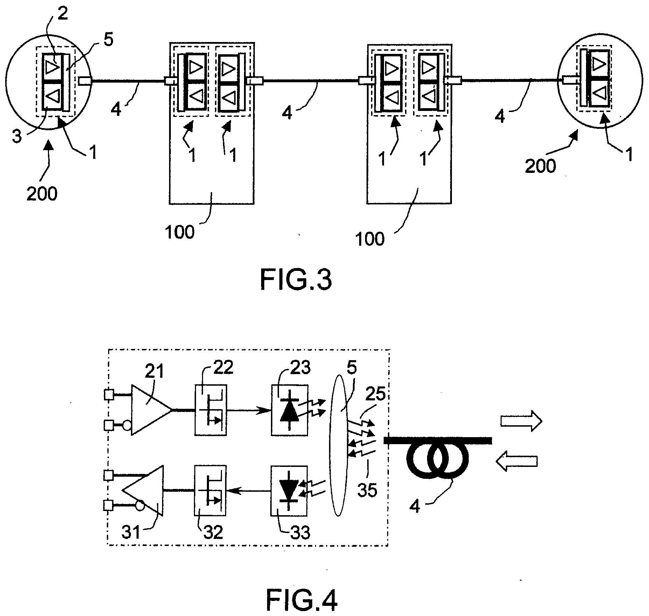

La figure 3 illustre une architecture de ce type. Cette figure représente les liaisons entre deux calculateurs abonnés 200 symbolisés par des cercles. Ces deux abonnés sont reliés entre eux par l'intermédiaire de deux éléments centraux 100. Les liaisons abonné-élément central et élément central-élément central sont réalisées par une fibre optique 4. Chaque fibre optique est reliée à ces deux extrémités à un dispositif de communication de type transceiver 1 comportant une partie émettrice 2, une partie réceptrice 3 et un dispositif optique permettant la séparation des faisceaux d'émission et de réception circulant dans la fibre optique.

Cette solution réduit naturellement les coûts, l'encombrement et le poids d'un facteur 2. Dans ce cas, le transceiver comporte une sortie optique unique qui assure l'émission et la réception de la lumière. Bien entendu, il faut séparer les faisceaux d'entrée et de sortie à l'intérieur du transceiver, les premiers destinés au photo-récepteur et les seconds venant de l'émetteur.

La figure 4 détaille l'architecture de chaque transceiver 1. La partie émettrice 2 comprend une interface électronique numérique d'entrée 21 compatible de la technologie de report sur carte électronique, une électronique analogique 22 transformant les signaux numériques en signaux analogiques, une source optique émettrice 23 qui émet un faisceau lumineux 25 modulé par le signal issu de l'électronique 22 (symbolisé par une double-flèche en zig-zag sur la figure 2). L'optique commune 5 réalise le couplage entre ledit faisceau sur l'entrée d'une fibre optique 4. La partie réceptrice comporte ladite optique commune 5 qui couple le faisceau issu de la fibre optique 4 sur un photo-détecteur 33. Le signal électrique généré par le photo-détecteur passe ensuite par une électronique analogique 32 et enfin par une électronique numérique 31 qui délivre un signal numérique compatible des niveaux de tension de la carte d'accueil. Les puissances émises sont de l'ordre de quelques dBm. Le dBm est l'unité de puissance utilisée en télécommunications optiques. Sa définition est la suivante :

$$1 dBm = 10 \log(P_{opt}/1\ mW)$$

avec $P_{opt}$ puissance optique en mWatt.

Les puissances reçues par le photo-détecteur sont de l'ordre de 0 dBm à -20 dBm pour un réseau de type aéronautique.

Plusieurs solutions techniques connues permettent de réaliser l'optique commune 5 qui assure la séparation des faisceaux lumineux.

La première solution consiste à utiliser une lame semi-réfléchissante pourvue d'un traitement dichroïque qui assure la séparation des faisceaux. Cependant, une grande partie de la lumière émise et reçue est perdue. Au mieux, 25 pour cent de la lumière émise est reçue à l'autre extrémité de la liaison. Or les pertes de liaison optique entre deux éléments du réseau peuvent atteindre 18 dB à 20 dB dans l'aéronautique, l'essentiel de ces pertes étant due à la connectique optique. En effet, une liaison optique peut comporter jusqu'à 7 points de connectique. La perte supplémentaire introduite par l'élément semi-réfléchissant est donc très préjudiciable au bon fonctionnement du réseau. D'autre part, dans cette disposition optique, le photo-récepteur reçoit une partie du signal émis par l'émetteur qui parasite le signal reçu.

Il est également possible de séparer les faisceaux optiques au moyen d'un petit miroir disposé à 45 degrés entre l'émetteur et la fibre optique comme indiqué dans le brevet US 6 351 581 intitulé « Optical transmitter-receiver and optically sending/receiving method ».

Il est possible de remplacer la lame semi-réfléchissante par un coupleur optique. On diminue ainsi les problèmes de lumière parasite. Cependant, les coupleurs sont des composants coûteux, encombrants et fragiles.

Enfin, afin de conserver des bilans de puissance corrects, il est possible d'émettre et de recevoir dans des bandes de longueur d'onde différentes par multiplexage en longueur d'onde. Cependant, le coût de ce type de solution reste élevé et difficilement compatible d'applications embarquées. D'autre part, cette solution est nécessairement plus complexe à mettre en oeuvre dans la mesure où elle nécessite différents types d'émetteurs et de récepteurs.

L'objet de l'invention est de proposer un transceiver de type mono-fibre ne présentant pas les inconvénients précédents. Le transceiver doit disposer d'une fonction optique permettant de séparer les faisceaux lumineux émis et reçus. Le coeur de l'invention est de réaliser une séparation géométrique des faisceaux sans le secours de composants séparateurs de type lames semi-réfléchissantes qui introduisent des pertes d'énergie lumineuse trop importantes. Les dispositions proposées permettent de réaliser des transceivers à composants intégrés et à bas coût.

Plus précisément, l'invention a pour objet un dispositif de communication optique pour fibre optique de type transceiver comportant au moins des moyens électroniques d'émission et de réception, une source d'émission de lumière, un photorécepteur et des moyens optiques ou une configuration optique permettant d'une part de coupler un faisceau de lumière dit d'émission issu de la source d'émission dans une fibre optique et d'autre part de coupler le faisceau de lumière dit de réception provenant de ladite fibre optique sur le photorécepteur, le faisceau d'émission sur la surface d'entrée de la dite fibre étant délimité par un angle solide $\alpha$ et le faisceau de réception sur ladite surface d'entrée étant délimité par un angle solide $\beta$, caractérisé en ce que l'angle solide $\alpha$ est essentiellement disjoint de l'angle solide $\beta$ permettant une séparation géométrique des faisceaux d'émission et de réception.

Elle a également pour objet un dispositif de communication optique pour fibre optique de type transceiver comportant au moins des moyens électroniques d'émission et de réception, une source d'émission de lumière, un photorécepteur et des moyens optiques ou une configuration optique permettant d'une part d'envoyer un faisceau de lumière dit d'émission issu de la source d'émission sur la surface d'entrée d'une fibre optique et d'autre part de coupler le faisceau de lumière dit de réception provenant de ladite fibre optique sur le photorécepteur, le faisceau d'émission sur ladite surface d'entrée de la fibre étant délimité par une aire d'émission et le faisceau de réception sur ladite surface d'entrée étant délimité par une aire de réception, caractérisé en ce que l'aire d'émission est de taille sensiblement inférieure à celle de l'aire de réception permettant une séparation géométrique des faisceaux d'émission et de réception.

Les moyens optiques ne comportent donc pas de lames semi-réfléchissantes ou de dispositifs équivalents pour séparer les faisceaux d'émission et de réception, ce qui permet d'obtenir de bons rendements de couplage pour les faisceaux émis et reçus.

L'invention sera mieux comprise et d'autres avantages apparaîtront à la lecture de la description qui va suivre donnée à titre non limitatif et grâce aux figures annexées parmi lesquelles :

- La figure 1 représente un schéma partiel d'une architecture Full-Duplex bi-voies selon l'art antérieur.
- La figure 2 représente un schéma électronique d'un transceiver à fibre optique bi-voies.
- La figure 3 représente un schéma partiel d'une architecture Full-Duplex mono-voie.
- La figure 4 représente un schéma électronique d'un transceiver à fibre optique mono-voie.
- La figure 5 représente la partie optique d'un transceiver selon l'invention dans un premier mode de réalisation.
- La figure 6 représente la partie optique d'un transceiver selon l'invention dans un second mode de réalisation.
- La figure 7 représente les faisceaux de lumière parasite dans ce second mode de réalisation.
- La figure 8 représente la partie optique d'un transceiver selon l'invention dans un troisième mode de réalisation.
- La figure 9 représente une variante du dispositif de la figure 8.
- La figure 10 donne les coefficients de transmission dans la fibre optique des faisceaux d'émission et de réception dans le cadre des dispositifs des figures 8 et 9.
- La figure 11 représente le schéma électronique d'un dispositif de contre-réaction permettant d'atténuer les effets de la lumière parasite.

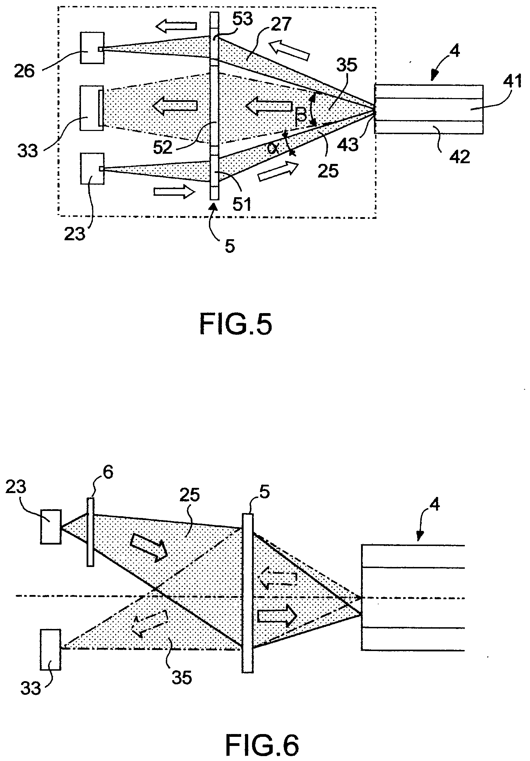

La figure 5 représente la partie optique d'un transceiver selon l'invention dans un premier mode de réalisation. Cette partie optique comprend essentiellement une source d'émission 23, un photodétecteur 33 et une lentille diffractive 5 disposée entre l'ensemble émetteur-photodétecteur et la fibre optique 4 encore appelé EOD, acronyme de Elément Optique Diffractif. La lentille 5 fonctionne par diffraction. C'est un réseau optique à deux ou trois dimensions constitué de micro-facettes qui diffractent la lumière. La taille et le profil des facettes permet de réaliser la fonction optique souhaitée avec des rendements de diffraction importants. Techniquement, les EODs sont réalisées par les techniques classiques de micro-usinage utilisées en micro-électronique. On peut ainsi sur un même support réaliser plusieurs fonctions optiques différentes. La lentille diffractive du transceiver comporte au moins deux zones géométriquement séparées, la première zone 51 située en périphérie de la lentille permettant la focalisation du faisceau d'émission issu de la source d'émission sur la surface d'entrée 43 de la fibre optique 4, la seconde zone 52 située en zone centrale de la lentille 5 permettant la focalisation du faisceau de réception issu de la fibre optique sur le photorécepteur 33. Sur la figure 5, les faisceaux d'émission et de réception sont représentés en zones grisées, les flèches indiquant le sens de propagation de la lumière. La surface 41 représente le coeur de la fibre optique et la surface 42 la gaine de la fibre optique. Le faisceau d'émission est couplé dans la fibre optique dans un angle solide $\alpha$, le faisceau de réception est émis par la fibre optique dans un angle solide $\beta$. L'angle solide $\alpha$ est choisi de façon que le faisceau de lumière 27 obtenu par réflexion vitreuse du faisceau d'émission sur la face d'entrée de la fibre optique soit renvoyé hors de la surface de détection du photodétecteur. Les angles solides $\alpha$ et $\beta$ sont géométriquement séparés. Ainsi, les faisceaux d'émission et de réception sont séparés le long de leur trajet optique et sont transmis sans pertes optiques importantes et avec un couplage entre l'émetteur optique et le photo-détecteur (cross-talk optique) faible. La lentille gravée a un diamètre de quelques centaines de microns et une épaisseur de quelques microns. Son efficacité de diffraction peut atteindre 95 pour cent.

Les EOD réalisées au moyen des technologies de fabrication de la microélectronique permettent une intégration extrêmement poussée pour un coût faible. De plus, parce qu'ils sont planaires, ils sont compatibles des technologies d'assemblage de la microélectronique. Ce dispositif est donc simple à mettre en oeuvre, d'encombrement réduit et de coût faible.

Il est possible de compléter ce dispositif comme indiqué sur la figure 5 en créant une troisième zone 53 permettant de focaliser la partie 27 du faisceau d'émission réfléchie par réflexion vitreuse sur la surface d'entrée 43 de la fibre 4 sur un second photorécepteur 26. Le signal électrique issu de ce second photorécepteur peut alors être utilisé pour le contrôle de la puissance émise par la source, encore appelé monitorage ou en terminologie anglo-saxonne : fonction wrap around. Cette fonction permet également de surveiller le vieillissement de la diode émettrice et peut être utilisée en maintenance préventive pour déterminer l'état du composant ou aider à la localisation d'une interface optique défaillante.

La figure 6 représente la partie optique d'un transceiver selon l'invention dans un second mode de réalisation. Cette partie optique comprend essentiellement une source d'émission 23, un photodétecteur 33, une première lentille diffractive 5 disposée entre l'ensemble émetteur-photodétecteur et la fibre optique 4 et une seconde lentille diffractive disposée devant la source d'émission 23. Les faisceaux d'émission et de réception sont représentés en zones grisées, les flèches indiquant le sens de propagation de la lumière. Les lentilles 5 et 6 ont la même technologie que la lentille diffractive précédente et leur utilisation conjointe permet de réaliser la fonction de coupleur optique bidirectionnel. La lentille 5 assure premièrement la focalisation du faisceau lumineux 35 issu de la fibre optique 4 sur le photo détecteur 33. Elle assure également la focalisation du faisceau 25 venant de l'émetteur 23 sur la fibre optique 4. Les deux faisceaux 25 et 35 ont des incidences différentes dans l'espace situé entre la lentille 5, l'émetteur et le photo récepteur et des incidences voisines dans l'espace situé entre la lentille 5 et la fibre optique 4. Malgré la sensibilité des EOD à l'angle d'incidence du faisceau, cette fonction est rendue possible grâce aux propriétés de reconstruction en phase des EOD et à la possibilité de multiplexer plusieurs fonctions optiques au sein d'un même élément. Le faisceau optique d'émission peut donc être couplé dans la fibre optique suivant la même direction que le faisceau de réception. La fonction de la lentille 6 consiste à contrôler la distribution de phase du faisceau optique issu de la source optique afin que celui-ci soit vu par la lentille 5 comme une faisceau optique provenant du photo-détecteur 33.

Soit F1 la fonction de transfert optique de la lentille 5 et F2 la fonction de transfert de la lentille 6, la fonction de transfert résultante, à l'émission, est $F_e$ avec $F_e$ =F1.F2.

Si F2* est la fonction de transfert optique conjuguée de la lentille 6 correspondant à un sens de propagation des photons de la fibre vers le photodétecteur, il est alors possible de trouver F1 telle que le résultante $F_e$ réalise la fonction souhaitée égale à F2*. On a alors F1 égale à F2*/F2.

Les lentilles 5 et 6 sont disposées de façon que l'émetteur 23 et le récepteur 33 se trouvent dans un même plan, ce qui facilite l'implantation de ces composants.

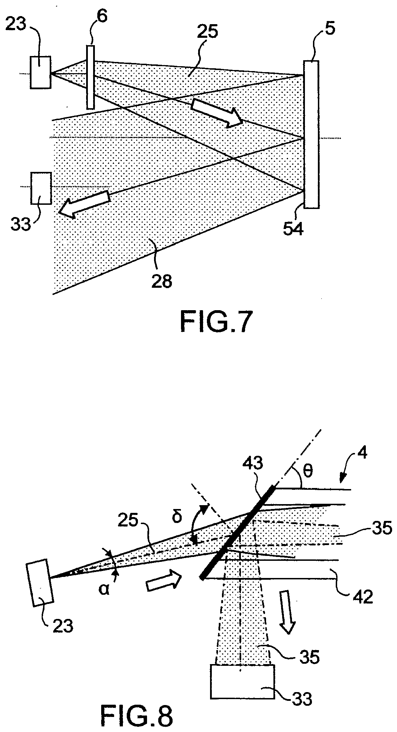

Une partie de la lumière émise est réfléchie par au moins la face d'entrée 54 de la lentille 5 comme indiqué sur la figure 7. Une partie de ce faisceau de lumière parasite 28 éclaire le photodétecteur. La puissance reçue $P_R$ par le détecteur du fait des réflexions sur la face d'entrée de la fibre est définie par la relation approchée suivante :

$$P_R = R_{fresnel} + 10 \log(\phi_{PhD}/ \phi_{Poptln}) + 10 \log(ON_{PhD}/ ON_{Poptln})$$

Avec $R_{fresnel}$ représentant la puissance totale réfléchie par l'interface commune à l'émetteur et au récepteur, $\phi_{PhD}$ le diamètre utile du photorécepteur, $\phi_{Poptln}$ le diamètre de la zone éclairée par le faisceau de lumière parasite 28 dans le plan du photo détecteur, $ON_{PhD}$ et $ON_{Poptln}$ représentant enfin les ouvertures numériques respectives du photo détecteur et de l'image de l'émetteur par la lentille 6, les 2 derniers termes de la relation étant négatifs. Généralement, le taux de couplage parasite qui se déduit de cette relation, encore appelé return loss est faible dans cette configuration. Il est possible de supprimer ou d'atténuer de façon importante le taux de couplage dû à la seconde face de la lentille 5 en interposant entre cette lentille et la fibre optique 4 un liquide d'indice qui va supprimer les réflexions parasites par adaptation de l'indice optique entre la lentille et la fibre optique.

La figure 8 représente la partie optique d'un transceiver selon l'invention dans un troisième mode de réalisation. Cette partie optique comprend essentiellement une source d'émission 23 et un photodétecteur 33. Les faisceaux d'émission et de réception sont représentés en zones grisées, les flèches indiquant le sens de propagation de la lumière. Dans cette configuration, la surface d'entrée 43 de la fibre optique est inclinée d'un angle θ voisin de 45 degrés sur l'axe optique de la fibre optique, la source d'émission étant située sur un axe incliné d'un angle δ par rapport à la normale à la fibre optique de façon que le faisceau d'émission 25 soit transmis dans la fibre optique 4 avec un couplage optimal. Le photorécepteur est situé sur un axe obtenu par réflexion de l'axe optique de la fibre sur la surface d'entrée 43, de façon que les faisceaux de réception soient transmis au photorécepteur par réflexion sur la surface d'entrée 43 puis par transmission à travers la gaine 42 de la fibre optique 4. Cette configuration particulièrement simple ne nécessite pas de composants optiques supplémentaires, la configuration géométrique assurant la transmission et la réception des signaux reçus. Les taux de transmission du faisceau d'émission et du faisceau de réception dépendent de leurs incidences respectives sur la surface d'entrée de la fibre, des indices du milieu fibre/composants optoélectronique et du coeur de la fibre. Il est possible d'optimiser les rendements en jouant sur les angles θ et δ.

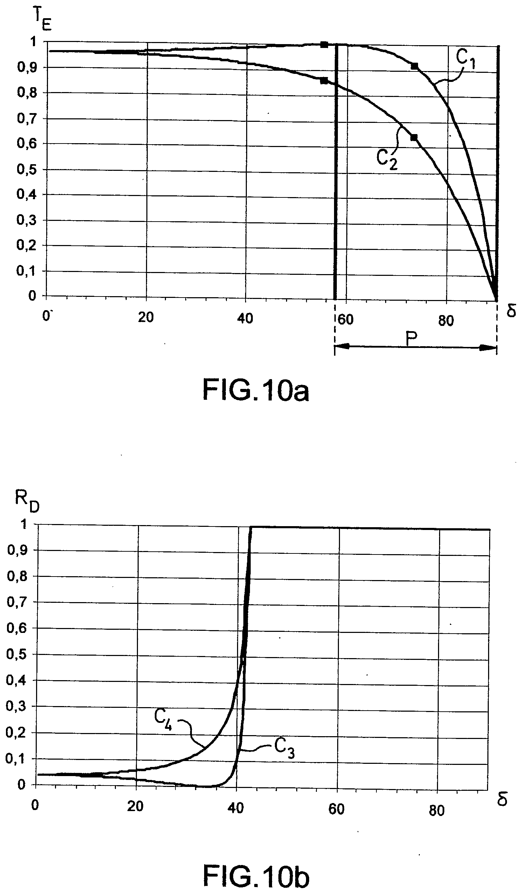

Les courbes $C_1$ et $C_2$ de la figure 10a représentent les coefficients de couplage $T_E$ entre le faisceau optique venant de l'émetteur et la fibre optique 4 pour les polarisations linéaires parallèle et perpendiculaire, fonction de l'angle d'incidence δ. La plage P représente la plage d'acceptance de la fibre optique permettant la propagation des faisceaux optiques dans la fibre optique pour un angle θ de 45 degrés.

Les courbes $C_3$ et $C_4$ de la figure 10b représentent les coefficients de réflexion $R_D$ du faisceau optique venant de la fibre optique sur la surface d'entrée 43 pour les polarisations linéaires parallèle et perpendiculaire, fonction de l'angle d'incidence δ sur cette surface. Au-delà de l'angle de réflexion total qui vaut un peu plus de 40 degrés, le faisceau est intégralement réfléchi.

Il est également possible de disposer un traitement anti-reflet sur la surface d'entrée 43 afin de diminuer encore les pertes par réflexion vitreuse du faisceau d'émission sur ladite surface d'entrée. Le contrôle des angles est réalisé, par exemple, par polissage de la fibre optique.

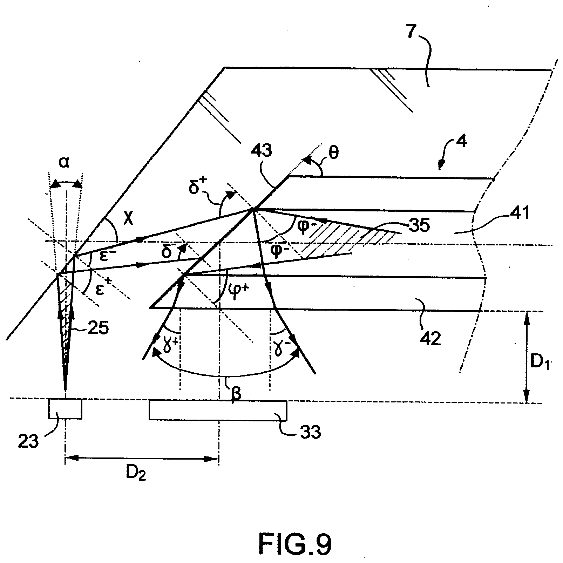

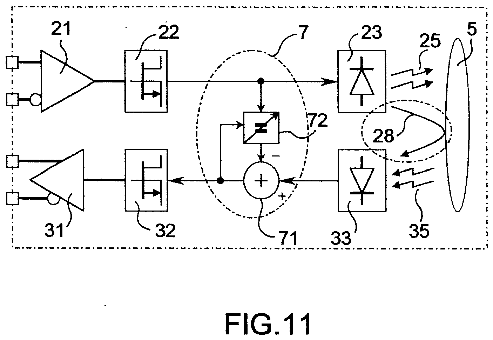

Dans une variante de la disposition précédente illustré en figure 9, la partie optique comporte un substrat 7 d'indice optique N en forme de pan coupé placé entre la surface d'entrée de la fibre optique et la source d'émission. L'inclinaison χ du pan coupé sur l'axe optique de la fibre optique est telle que l'angle d'incidence des faisceaux d'émission sur le pan coupé varie ente $\varepsilon_-$ et $\varepsilon_+$. Cette incidence est suffisamment élevée pour qu'il y ait réflexion totale sur le milieu d'indice optique N après réflexion sur ce pan coupé. Le faisceau d'émission est transmis dans la fibre optique sous un

angle $\delta$ variant entre $\delta_+$ et $\delta_-$ permettant d'assurer un bon couplage. L'incidence des faisceaux de réception sur le surface d'entrée de la fibre optique varie entre $\varphi_+$ et $\varphi_-$. Cette incidence est suffisamment élevée pour qu'il y ait réflexion totale sur la surface d'entrée 43. Les faisceaux réfléchis par ladite surface sont transmis par la gaine 42 de la fibre optique sous une incidence variant entre $\gamma_+$ et $\gamma_-$ délimitant l'angle de réception $\beta$ sur le photo détecteur 33. La source d'émission et le photo-récepteur sont dans un même plan situé à une distance $D_1$ de la fibre optique 4. L'émetteur 23 et le photo récepteur 33 sont séparés d'une distance $D_2$ suffisante pour permettre leur intégration. Cette disposition favorise l'intégration des éléments optoélectroniques d'émission et de réception. Le contrôle des angles est réalisé, par exemple, par polissage de la fibre optique et par gravure humide du support silicium servant à l'alignement des différents composants entre eux comme présenté figure 11.

Dans cette architecture, les couplages optiques directs entre émetteur et récepteur sont quasi-inexistants. Ils sont encore diminués par la réalisation d'un traitement anti-reflet comme indiqué dans le paragraphe précédent.

Les configurations décrites présentent généralement peu de taux de couplage (en anglais : return loss). Ce taux peut être facilement estimé en utilisant des relations donnant les différents paramètres géométriques et photométriques du dispositif. Cependant, les faisceaux lumineux de réception sont par nature, d'amplitude beaucoup plus faibles que les faisceaux émis. Par conséquent, le taux de couplage peut s'avérer gênant dans certaines configurations. Il est possible alors de mettre en place un dispositif électronique de contre-réaction 7 disposé entre les électroniques d'émission et de réception, la fonction électronique dudit dispositif étant de soustraire au signal électrique issu du photorécepteur 33 un signal électrique égal au signal parasite dû aux réflexions parasites 28 du faisceau d'émission 25 éclairant ledit photorécepteur 33. La figure 11 illustre ce principe. Ledit dispositif de contre-réaction comporte au moins un égaliseur électronique 71 et un filtre adaptatif 72 dont les coefficients sont ajustés dans une phase préliminaire de calibrage. En l'absence de signal reçu, le photo-récepteur reçoit uniquement un signal lumineux dû au taux de couplage parasite. Ce signal parasite est identique au signal émis, à l'amplitude près. Connaissant cette amplitude, il est alors possible en sortie du photo-détecteur d'éliminer ce signal parasite en lui soustrayant un signal de même amplitude et de forme identique à celle du signal émis. On élimine ainsi en grande partie les effets dus au taux de couplage.

Pour les différentes configurations selon l'invention, la source émettrice peut être une diode laser, une diode électroluminescente ou un laser VCSEL (acronyme anglo-saxon pour Vertical Cavity Surface Emitting Laser). Les longueurs d'onde d'émission sont typiquement situées dans le proche infra-rouge, par exemple à 850 nanomètres.

Le photo-détecteur peut être par exemple une photodiode PIN en technologie AsGa (Arséniure de Gallium) ou MSM (acronyme de Metal - Schottky - Metal).

Les caractéristiques géométriques importantes d'une fibre optique multimode ou monomode sont le diamètre du coeur optique de la fibre donné en microns et le diamètre de la gaine de la fibre également en microns. Pour ce type d'application, les standards de fibres optiques multimodes généralement utilisés sont 62.5/125 ou 50/125, le premier chiffre représentatif du diamètre du coeur et le second représentatif du diamètre de la gaine de la fibre. Préférentiellement, les fibres optiques sont en silice avec un coeur à gradient d'indice.

Pour connecter la fibre optique au transceiver, il existe deux types de solutions possibles : Soit le dispositif comporte un premier connecteur optique dans lequel vient se fixer la fibre optique 4 au moyen d'un second connecteur, soit le dispositif comporte une embase optique dans laquelle la fibre optique 4 est fixée par une de ses extrémités, l'extrémité libre comportant un connecteur optique de raccordement, le dispositif étant dit pigtailisé. Tous les types de connecteurs standards peuvent être adaptés au transceiver selon l'invention.

Une carte électronique peut comporter au moins un dispositif selon l'invention. Un calculateur électronique peut comporter au moins ladite carte électronique. Un système de communication par fibres optiques dit Full-duplex permettant l'émission et la réception simultanée de signaux sur une seule fibre optique peut comporter au moins deux calculateurs électroniques de ce type.

Un dispositif opto-électronique de type répéteur ou commutateur peut comporter un dispositif de communication optique selon l'invention. Un système de communication par fibres optiques dit Full-duplex permettant l'émission et la réception simultanée de signaux sur une seule fibre optique peut comporter au moins ledit dispositif opto-électronique.

**Revendications**

1. Dispositif de communication optique (1) pour fibre optique de type transceiver comportant au moins des moyens électroniques d'émission et de réception (21, 22, 31, 32), une source d'émission de lumière (23), un photorécepteur (34) et des moyens optiques (5) ou une configuration optique permettant d'une part d'envoyer un faisceau de lumière dit d'émission (25) issu de la source d'émission sur la surface d'entrée (43) d'une fibre optique (4) unique et d'autre part de coupler le faisceau de lumière dit de réception (35) provenant de ladite fibre optique sur le photorécepteur (34), le faisceau d'émission sur ladite surface d'entrée de la fibre étant délimité par un angle solide $\alpha$ et le faisceau de réception sur ladite surface d'entrée étant délimité par un angle solide $\beta$, **caractérisé en ce que** l'angle solide $\alpha$ est essentiellement disjoint de l'angle solide $\beta$ permettant une séparation géométrique des faisceaux d'émission et de réception et **en ce que** la surface d'entrée (43) de la fibre optique est inclinée d'un angle θ voisin de 45 degrés par rapport à l'axe optique de la fibre optique, la source d'émission étant située sur un axe incliné d'un angle δ par rapport à la normale à la fibre optique de façon que le faisceau d'émission (25) soit transmis dans la fibre optique (4), cet angle δ étant supérieur ou égal à environ 60 degrés et, le photorécepteur étant situé sur un axe obtenu par réflexion de l'axe optique de la fibre sur la surface d'entrée (43), de façon que les faisceaux de réception soient transmis au photorécepteur par réflexion sur la surface d'entrée (43).

2. Dispositif de communication optique (1) pour fibre optique de type transceiver comportant au moins des moyens électroniques d'émission et de réception (21, 22, 31, 32), une source d'émission de lumière (23), un photorécepteur (34) et des moyens optiques (5) ou une configuration optique permettant d'une part d'envoyer un faisceau de lumière dit d'émission (25) issu de la source d'émission sur la surface d'entrée (43) d'une fibre optique (4) unique et d'autre part de coupler le faisceau de lumière dit de réception (35) provenant de ladite fibre optique sur le photorécepteur (34), le faisceau d'émission sur ladite surface d'entrée de la fibre étant délimité par un angle solide α et le faisceau de réception sur ladite surface d'entrée étant délimité par un angle solide β, **caractérisé en ce que** l'angle solide α est essentiellement disjoint de l'angle solide β permettant une séparation géométrique des faisceaux d'émission et de réception et **en ce que** les moyens optiques consistent essentiellement en une lentille diffractive (5) comprenant au moins deux zones géométriquement séparées, la première zone (51) permettant la focalisation du faisceau d'émission sur la surface d'entrée (43) de la fibre optique (4), la seconde zone (52) permettant la focalisation du faisceau de réception issu de la fibre optique sur le photorécepteur (33).

3. Dispositif de communication optique selon la revendication 2, **caractérisé en ce que** le dispositif comporte un second photorécepteur (26) et que la lentille diffractive (5) comporte également une troisième zone (53) permettant de focaliser la partie (27) du faisceau d'émission réfléchie par réflexion vitreuse sur la surface d'entrée (43) de la fibre (4) sur ledit second photorécepteur (26).

4. Dispositif de communication optique selon la revendication 1, **caractérisé en ce que** la surface d'entrée (43) comporte un traitement anti-reflet permettant de diminuer les pertes par réflexion vitreuse du faisceau d'émission sur la surface d'entrée (43).

5. Dispositif de communication optique selon l'une des revendications 1 ou 4, **caractérisé en ce que** le dispositif comporte un substrat en forme de pan coupé placé entre la surface d'entrée de la fibre optique et la source d'émission de façon que le faisceau d'émission, après réflexion sur ce pan coupé soit transmis dans la fibre optique et que la source d'émission et le photorécepteur soient situés dans un même plan.

6. Dispositif de communication optique selon la revendication 2, **caractérisé en ce que** les moyens optiques consistent essentiellement en deux lentilles diffractives (5, 6), le faisceau d'émission (25) étant couplé sur la surface d'entrée (43) de la fibre optique (4) par diffraction par les lentilles (5,6), le faisceau de réception (35) étant couplé sur le photorécepteur (33) par diffraction par la lentille (5).

7. Dispositif de communication optique selon l'une des revendications précédentes, **caractérisé en ce que** les faisceaux de lumière d'émission et de réception ont environ la même longueur d'onde.

8. Dispositif de communication optique selon l'une des revendications précédentes, **caractérisé en ce qu'**il comporte un dispositif électronique de contre-réaction (7) disposé entre les électroniques d'émission et de réception, la fonction électronique dudit dispositif étant de soustraire au signal électrique issu du photorécepteur (33) un signal électrique égal au signal parasite dû aux réflexions parasites du faisceau d'émission (25) éclairant ledit photorécepteur (33).

9. Dispositif de communication optique selon la revendication 8, **caractérisé en ce que** ledit dispositif de contre-réaction comporte au moins un égaliseur électronique et un filtre adaptatif.

10. Dispositif de communication optique selon l'une des revendications précédentes, **caractérisé en ce que** ledit dispositif comporte un premier connecteur optique dans lequel vient se fixer la fibre optique (4) au moyen d'un second connecteur.

11. Dispositif de communication optique selon l'une des revendications précédentes, **caractérisé en ce que** ledit dispositif comporte une embase optique dans laquelle la fibre optique (4) est fixée par une de ses extrémités, l'extrémité libre comportant un connecteur optique de raccordement, le dispositif étant dit pigtailisé.

**12.** Carte électronique **caractérisée en ce qu'**elle comporte au moins un dispositif selon l'une des revendications précédentes.

**13.** Calculateur électronique **caractérisé en ce qu'**il comporte au moins une carte électronique selon la revendication 12.

**14.** Dispositif opto-électronique de type répéteur ou commutateur **caractérisé en ce qu'**il comporte un dispositif de communication optique selon la revendication 11.

**15.** Système de communication par fibres optiques dit Full-duplex permettant l'émission et la réception simultanée de signaux sur une seule fibre optique, **caractérisé en ce qu'**il comporte au moins deux calculateurs électroniques selon la revendication 13.

**16.** Système de communication par fibres optiques dit Full-duplex permettant l'émission et la réception simultanée de signaux sur une seule fibre optique, **caractérisé en ce qu'**il comporte au moins un dispositif optoélectronique selon la revendication 14.

**Patentansprüche**

**1.** Optische Kommunikationseinrichtung (1) für optische Faser vom Transceiver-Typ, umfassend wenigstens elektronische Sende- und Empfangsmittel (21, 22, 31, 32), eine Lichtsendequelle (23), einen Fotorezeptor (34) und optische Mittel (5) oder eine optische Konfiguration, die einerseits das Senden eines Lichtstrahls (25), Sendelichtstrahl genannt, von der Sendequelle auf die Eingangsfläche (43) einer einzigen optischen Faser (4) und andererseits das Koppeln des Lichtstrahls, Empfangslichtstrahl (35) genannt, von der optischen Faser auf den Fotorezeptor (34) zulässt, wobei der Sendestrahl auf der Eingangsfläche der Faser durch einen Raumwinkel $\alpha$ begrenzt ist und der Empfangsstrahl auf der Eingangsfläche durch einen Raumwinkel $\beta$ begrenzt ist, **dadurch gekennzeichnet, dass** der Raumwinkel $\alpha$ im Wesentlichen von dem Raumwinkel $\beta$ abgekoppelt ist, so dass eine geometrische Trennung von Sende- und Empfangsstrahlen möglich ist, und dadurch, dass die Eingangsfläche (43) der optischen Faser in einem Winkel $\theta$ nahe 45 Grad mit Bezug auf die optische Achse der optischen Faser geneigt ist, wobei sich die Sendequelle auf einer Achse befindet, die in einem Winkel $\delta$ mit Bezug auf die Normale zu der optischen Faser geneigt ist, so dass der Sendestrahl (25) in der optischen Faser (4) übertragen wird, wobei dieser Winkel $\delta$ gleich oder größer als etwa 60 Grad ist und der Fotorezeptor sich auf einer Achse befindet, die durch Reflexion der optischen Achse der Faser auf der Eingangsfläche (43) erhalten wird, so dass die Empfangsstrahlen durch Reflexion auf der Eingangsfläche (43) auf den Fotorezeptor übertragen werden.

**2.** Optische Kommunikationseinrichtung (1) für optische Faser des Transceiver-Typs, umfassend wenigstens elektronische Sende- und Empfangsmittel (21, 22, 31, 32), eine Lichtsendequelle (23), einen Fotorezeptor (34) und optische Mittel (5) oder eine optische Konfiguration, die einerseits das Senden eines Lichtstrahls (25), Sendelichtstrahl genannt, von der Sendequelle auf die Eingangsfläche (43) einer einzigen optischen Faser (4) und andererseits das Koppeln des Lichtstrahls (35), Empfangslichtstrahl genannt, von der optischen Faser auf den Fotorezeptor (34) zulässt, wobei der Sendestrahl auf der Eingangsfläche der Faser durch einen Raumwinkel $\alpha$ begrenzt ist und der Empfangsstrahl auf der Eingangsfläche durch einen Raumwinkel $\beta$ begrenzt ist, **dadurch gekennzeichnet, dass** der Raumwinkel $\alpha$ im Wesentlichen von dem Raumwinkel $\beta$ abgekoppelt ist, so dass eine geometrische Trennung der Sende- und Empfangsstrahlen möglich ist, und dadurch, dass die optischen Mittel im Wesentlichen aus einer diffraktiven Linse (5) bestehen, die wenigstens zwei separate geometrische Zonen umfasst, wobei die erste Zone (51) die Fokussierung des Sendestrahls auf der Eingangsfläche (43) der optischen Faser (4) zulässt und die zweite Zone (52) die Fokussierung des Empfangsstrahls von der optischen Faser auf den Fotorezeptor (33) zulässt.

**3.** Optische Kommunikationseinrichtung nach Anspruch 2, **dadurch gekennzeichnet, dass** die Einrichtung einen zweiten Fotorezeptor (26) umfasst und dass die diffraktive Linse (5) auch eine dritte Zone (53) umfasst, die eine Fokussierung des Teils (27) des durch glasartige Reflexion auf der Eingangsfläche (43) der Faser (4) reflektierten Sendestrahls auf dem zweiten Fotorezeptor (26) zulässt.

**4.** Optische Kommunikationseinrichtung nach Anspruch 1, **dadurch gekennzeichnet, dass** die Eingangsfläche (43) eine Antireflexionsbehandlung aufweist, die es zulässt, Verluste durch glasartige Reflexion des Sendestrahls auf der Eingangsfläche (43) zu minimieren.

**5.** Optische Kommunikationseinrichtung nach Anspruch 1 oder 4, **dadurch gekennzeichnet, dass** die Einrichtung ein Substrat in Form einer schrägen Kante umfasst, platziert zwischen der Eingangsfläche der optischen Faser und der Sendequelle, so dass die Sendequelle nach der Reflexion an der schrägen Kante in der optischen Faser übertragen wird und die Sendequelle und der Fotorezeptor sich in derselben Ebene befinden.

6.  Optische Kommunikationseinrichtung nach Anspruch 2, **dadurch gekennzeichnet, dass** die optischen Mittel im Wesentlichen aus zwei diffraktiven Linsen (5, 6) bestehen, wobei der Sendestrahl (25) auf der Eingangsfläche (43) der optischen Faser (4) durch Diffraktion durch die Linsen (5, 6) gekoppelt wird, wobei der Empfangsstrahl (35) auf dem Fotorezeptor (33) durch Diffraktion durch die Linse (5) gekoppelt wird.

7.  Optische Kommunikationseinrichtung nach einem der vorherigen Ansprüche, **dadurch gekennzeichnet, dass** die Sende- und Empfangslichtstrahlen etwa dieselbe Wellenlänge haben.

8.  Optische Kommunikationseinrichtung nach einem der vorherigen Ansprüche, **dadurch gekennzeichnet, dass** sie eine elektronische Gegenreaktionseinrichtung (7) umfasst, die zwischen den elektronischen Sende- und Empfangsmitteln angeordnet ist, wobei die elektronische Funktion der Einrichtung das Subtrahieren, von dem elektrischen Signal von dem Fotorezeptor (23), eines elektrischen Signals ist, das gleich dem parasitären Signal aufgrund von parasitären Reflexionen von dem den Fotorezeptor (33) beleuchteten Sendestrahl (25) ist.

9.  Optische Kommunikationseinrichtung nach Anspruch 8, **dadurch gekennzeichnet, dass** die Gegenreaktionseinrichtung wenigstens einen elektronischen Equalizer und ein adaptives Filter umfasst.

10. Optische Kommunikationseinrichtung nach einem der vorherigen Ansprüche, **dadurch gekennzeichnet, dass** die Einrichtung einen ersten optischen Verbinder umfasst, in dem die optische Faser (4) mittels eines zweiten Verbinders befestigt wird.

11. Optische Kommunikationseinrichtung nach einem der vorherigen Ansprüche, **dadurch gekennzeichnet, dass** die Einrichtung eine optische Basis umfasst, in der die optische Faser (4) an einem ihrer Enden befestigt ist, wobei das freie Ende einen optischen Anschlussverbinder umfasst, wobei die Einrichtung mit einem Anschlussdraht versehen ist.

12. Chipkarte, **dadurch gekennzeichnet, dass** sie wenigstens eine Einrichtung nach einem der vorherigen Ansprüche umfasst.

13. Elektronischer Rechner, **dadurch gekennzeichnet, dass** er wenigstens eine elektronische Karte nach Anspruch 12 umfasst.

14. Optoelektronische Einrichtung des Repeater- oder Schaltertyps, **dadurch gekennzeichnet, dass** sie eine optische Kommunikationseinrichtung nach Anspruch 11 umfasst.

15. Kommunikationssystem mit optischen Fasern, Vollduplex genannt, das das gleichzeitige Senden und Empfangen von Signalen auf einer einzigen optischen Faser zulässt, **dadurch gekennzeichnet, dass** es wenigstens zwei elektronische Rechner nach Anspruch 13 umfasst.

16. Kommunikationssystem mit optischen Fasern, Vollduplex genannt, das das gleichzeitige Senden und Empfangen von Signalen auf einer einzigen optischen Faser umfasst, **dadurch gekennzeichnet, dass** es wenigstens eine optoelektronische Einrichtung nach Anspruch 14 umfasst.

**Claims**

1.  Optical communication device (1) for an optical fibre of the transceiver type, comprising at least electronic transmission and receiving means (21, 22, 31, 32), a light transmission source (23), a photoreceiver (34) and optical means (5) or an optical configuration which enables, on the one hand, the transmission of a light beam referred to as a transmission light beam (25) originating from the transmission source on the input surface (43) of a single optical fibre (4) and, on the other hand, the coupling of the light beam referred to as the receiving light beam (35) originating from the optical fibre on the photoreceiver (34), the transmission beam on the input surface of the fibre being delimited by a solid angle $\alpha$ and the receiving beam on the input surface being delimited by a solid angle ß, **characterised in that** the solid angle $\alpha$ is substantially disjoint from the solid angle ß which enables a geometric separation of the transmission and receiving beams and **in that** the input surface (43) of the optical fibre is inclined through an angle θ close to 45 degrees relative to the optical axis of the optical fibre, the transmission source being located on an axis which is inclined through an angle δ relative to the normal with respect to the optical fibre so that the transmission beam (25) is transmitted in the optical fibre (4), this angle δ being greater than or equal to approximately 60 degrees and, the photoreceiver being located on an axis obtained by reflection of the optical axis of the fibre on the input surface (43), so that the receiving beams are transmitted to the photoreceiver by means of reflection on the input surface (43).

2. Optical communication device (1) for an optical fibre of the transceiver type comprising at least electronic transmission and receiving means (21, 22, 31, 32), a light transmission source (23), a photoreceiver (34) and optical means (5) or an optical configuration which enables, on the one hand, the transmission of a light beam referred to as a transmission light beam (25) originating from the transmission source on the input surface (43) of a single optical fibre (4) and, on the other hand, the coupling of the light beam referred to as the receiving light beam (35) originating from the optical fibre on the photoreceiver (34), the transmission beam on the input surface of the fibre being delimited by a solid angle α and the receiving beam on the input surface being delimited by a solid angle ß, **characterised in that** the solid angle α is substantially disjoint from the solid angle ß which enables a geometric separation of the transmission and receiving beams and **in that** the optical means substantially comprise a diffractive lens (5) which comprises at least two geometrically separate zones, the first zone (51) enabling the transmission beam to be focused on the input surface (43) of the optical fibre (4), the second zone (52) enabling the receiving beam originating from the optical fibre to be focused on the photoreceiver (33).

3. Optical communication device according to claim 2, **characterised in that** the device comprises a second photoreceiver (26) and **in that** the diffractive lens (5) also comprises a third zone (53) which enables the portion (27) of the transmission beam reflected by vitreous reflection on the input surface (43) of the fibre (4) to be focused on the second photoreceiver (26).

4. Optical communication device according to claim 1, **characterised in that** the input surface (43) comprises an anti-reflective treatment which enables the losses resulting from vitreous reflection of the transmission beam on the input surface (43) to be reduced.

5. Optical communication device according to either claim 1 or 4, **characterised in that** the device comprises a substrate in the form of a cut face placed between the input surface of the optical fibre and the transmission source so that the transmission beam, after reflection on this cut face, is transmitted into the optical fibre and **in that** the transmission source and the photoreceiver are located in the same plane.

6. Optical communication device according to claim 2, **characterised in that** the optical means substantially comprise two diffractive lenses (5, 6), the transmission beam (25) being coupled to the input surface (43) of the optical fibre (4) by means of diffraction by the lenses (5, 6), the reception beam (35) being coupled to the photoreceiver (33) by means of diffraction by the lens (5).

7. Optical communication device according to any one of the preceding claims, **characterised in that** the transmission and receiving light beams have approximately the same wavelength.

8. Optical communication device according to any one of the preceding claims, **characterised in that** it comprises an electronic counter-reaction device (7) which is arranged between the electronic transmission and reception systems, the electronic function of the device being to subtract from the electrical signal originating from the photoreceiver (33) an electrical signal which is equal to the parasitic signal resulting from the parasitic reflections of the transmission beam (25) which illuminates the photoreceiver (33).

9. Optical communication device according to claim 8, **characterised in that** the counter-reaction device comprises at least an electronic equaliser and an adaptive filter.

10. Optical communication device according to any one of the preceding claims, **characterised in that** the device comprises a first optical connector in which the optical fibre (4) is fixed using a second connector.

11. Optical communication device according to any one of the preceding claims, **characterised in that** the device comprises an optical base in which the optical fibre (4) is fixed via one of the ends thereof, the free end comprising an optical connection connector, the device being said to be pigtailed.

**12.** Electronic card, **characterised in that** it comprises at least one device according to any one of the preceding claims.

**13.** Electronic processor, **characterised in that** it comprises at least one electronic card according to claim 12.

**14.** Optoelectronic device of the repeater or commutator type, **characterised in that** it comprises an optical communication device according to claim 11.

**15.** Optical fibre communication system which is referred to as full-duplex and which enables signals to be simultaneously transmitted and received on a single optical fibre, **characterised in that** it comprises at least two electronic processors according to claim 13.

**16.** Optical fibre communication system which is referred to as full-duplex and which enables signals to be simultaneously transmitted and received on a single optical fibre, **characterised in that** it comprises at least one optoelectronic device according to claim 14.

FIG.1

FIG.2

FIG.3

FIG.4

EP 1 668 804 B1

**FIG.5**

**FIG.6**

**FIG.7**

**FIG.8**

FIG.9

FIG.10a

FIG.10b

FIG.11

**EP 1 668 804 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6351581 B